# EUROPÄISCHE PATENTSCHRIFT

(11) **EP 2 445 837 B1**
(45) Veröffentlichungstag und Bekanntmachung des Hinweises auf die Patenterteilung: **05.11.2014**
(21) Anmeldenummer: 10725459.1
(22) Anmeldetag: 16.06.2010
(51) Int. Cl.: C01B 33/107, C01F 7/02

(54) **VERFAHREN ZUR HERSTELLUNG VON DODECAHALOGENNEOPENTASILANEN**
METHOD FOR PRODUCING DODECA HALOGEN NEOPENTASILANES
PROCÉDÉ DE PRODUCTION DE DODÉCAHALOGÉNO-NÉOPENTASILANES

(30) Priorität: 25.06.2009 DE 102009027194
(43) Veröffentlichungstag der Anmeldung: 02.05.2012
(73) Patentinhaber: Wacker Chemie AG, 81737 München (DE)
(72) Erfinder: STEPP, Michael, A-8122 Überackern (AT)
(74) Vertreter: Fritz, Helmut
(86) Internationale Anmeldenummer: PCT/EP2010/058430
(87) Internationale Veröffentlichungsnummer: WO 2010/149547

(56) Entgegenhaltungen:
- WO-A1-2008/051328
- WO-A1-2010/043551
- HOEFLER, F.; JANNACH, R.; RAML, W.: "Darstellung und Eigenschaften einiger hochchlorierter Oligosilane" ZEITSCHRIFT FUER ANORGANISCHE UND ALLGEMEINE CHEMIE, Bd. 428, Nr. 1, 1977, Seiten 75-82, XP002596965 ISSN: 0044-2313 DOI: 10.1002/zaac.19774280109
- GRANT URRY: "Systematic synthesis in the polysilane series" ACC. CHEM. RES., Bd. 3, Nr. 9, September 1970 (1970-09), Seiten 306-312, XP002596966 DOI: 10.1021/ar50033a004

## Beschreibung

Die Erfindung betrifft ein Verfahren zur Herstellung von Dodecahaloneopentasilanen aus Perhalopolysilanen in Gegenwart von Katalysatoren und einem hochsiedenden Lösungsmittel.

Die aus den Dodecahalogenneopentasilanen (Neopentasilane = Tetrakis(silyl)silane) zugänglichen Siliciumwasserstoffverbindungen werden für die Abscheidung von Si-C in CVD-Verfahren eingesetzt.

Die Herstellung von Dodecahalogenneopentasilanen ist beispielsweise in WO 20080513281 und J. Inorg. Nucl. Chem., 1964, Vol. 26, 421-425 beschrieben.

In WO 20080513281 wird Hexahalogendisilan mit tertiären Aminen als Katalysatoren zu Tetrakis(trihalosilyl)-silan enthaltenden Gemischen umgesetzt. Zur Aufarbeitung wird die Reaktionsmischung bis zur Trockene im Vakuum eingedampft, sodass schwerflüchtige Verunreinigungen (z.B. Perhalopolysilane) gar nicht oder nur unvollständig abgetrennt werden können. Eine Reinigung erfolgt erst nach dem Austausch der Chloratome gegen Wasserstoff durch Destillation des Zielproduktes Neopentasilan. Da für diese Folgeumsetzung Alkylaluminiumhydride eingesetzt werden, bedeuten halogenhaltige Nebenprodukte einen unnötig hohen Verbrauch dieser teuren Ausgangsverbindungen und damit einen wirtschaftlichen Nachteil.

Aus J. Inorg. Nucl. Chem., 1964, Vol. 26, 421-425 ist die Herstellung von Dodecachlorneopentasilan aus Hexachlordisilan oder Octachlortrisilan mit Trimethylamin bekannt.

Weiterhin ist dort beschrieben, dass Dodecachlorneopentasilan Addukte mit dem als Nebenprodukt gebildeten Tetrachlorsilan bildet. Erst durch aufwendige und langwierige Trocknung des Feststoffes im Vakuum gelingt es, das im Kristall gebundene Tetrahalogensilan und andere flüchtige Verunreinigungen wie z.B. Hexachlordisilan zu entfernen.

Das Verfahren ist deshalb für die Herstellung der reinen Perhalogenpolysilane in einem technischen Maßstab ungeeignet.

Aufgabe war die Entwicklung eines Verfahrens, das die Nachteile des Standes der Technik nicht mehr aufweist.

Gegenstand der Erfindung ist ein Verfahren zur Herstellung von Neopentasilanen der allgemeinen Formel (1)

Si(SiR₃)₄ (1),

bei dem Siliciumverbindungen der allgemeinen Formel (2)

R₃Si-(SiR₂-)ₓSiR₃ (2),

wobei
- R: ausgewählt wird aus Cl, Br und J und
- x: eine nichtnegative ganze Zahl bis 5 bedeutet,
in Gegenwart von katalytisch aktiven Verbindungen (K) umgesetzt werden, wobei das bei der Reaktion gebildete Tetrahalogensilan von Anfang an abdestilliert wird, nach beendeter Umsetzung, d.h. wenn die Hauptmenge des gebildeten Tetrahalogensilans abdestilliert ist, eine bei Raumtemperatur flüssige Verbindung (L), die einen höheren Siedepunkt aufweist, als das freigesetzte Tetrahalogensilan dem Destillationssumpf zugefügt wird, die Abtrennung des Tetrahalogensilans durch Abdestillieren in Anwesenheit der Verbindung (L) erfolgt und man danach den Destillationssumpf abkühlen lässt, wobei das Tetrahalogensilan-freie Neopentasilanen der allgemeinen Formel (1) ausfällt.

Das Tetrahalogensilan kann durch das erfindungsgemässe Verfahren auf einfache und sehr wirkungsvolle Weise abgetrennt werden. So können reine Neopentasilane der allgemeinen Formel (1) erhalten werden.

Als bei Raumtemperatur flüssige Verbindung (L), nachstehend Hochsieder (L) genannt, eignen sich alle unter den Reaktions- und Destillationsbedingungen mit Si-Si- und Si-HalogenVerbindungen unreaktiven Verbindungen, wie Kohlenwasserstoffe z.B. Alkane (n-Hexan, n-Heptan, n-Octan, Cyclohexan, Cycloheptan, Paraffine z.B. Hydroseal G400H, Decalin), Alkene (z.B. Cyclohexen, 1-Hepten, 1- Octen, Cycloocten), Aromaten (z.B. Benzol, Toluol, o-Xylol, m-Xylol, p-Xylol, Brombenzol, Chlorbenzol, Fluorbenzol), Ether (z.B. Di-n-butylether, Di-n-hexylether, Diphenylether, Phenylmethylether, 1,4-Dioxan, 3,4-Dihydro-2H-pyran, Tetrahydropyran); Siloxane, insbesondere lineare Dimethylpolysiloxane mit Trimethylsilylendgruppen mit bevorzugt 0 bis 6 Dimethylsiloxaneinheiten, oder cyclische Dimethylpolysiloxane mit bevorzugt 4 bis 7 Dimethylsiloxaneinheiten, beispielsweise Hexamethyldisiloxan, Octamethyltrisiloxan, Octamethylcyclotetrasiloxan, Decamethylcyclopentasiloxan oder Gemische der genannten Stoffe. Bevorzugt werden Stoffe eingesetzt, in denen die Dodecahalogenneopentasilane schlecht löslich sind, insbesondere Kohlenwasserstoffe und Siloxan. Besonders bevorzugt sind aufgrund ihrer kommerziellen Verfügbarkeit und der geringen Reaktivität Kohlenwasserstoffe wie Toluol, hochsiedende Paraffine und Decalin. Vorzugsweise werden Hochsieder (L) eingesetzt, deren Siedepunkt bei 1023 hPa mindestens 10°C, besonders bevorzugt mindestens 15°C über dem Siedepunkt des jeweiligen Tetrahalogensilans liegt.

Als katalytisch aktive Verbindungen (K) kommen alle Verbindungen in Frage, die geeignet sind, die Umlagerungsreaktion von linearen Perhalogenpolysilanen in Perhalogenneopentasilane zu beschleunigen, Sie werden in den in den genannten Schriften genannten Konzentrationen eingesetzt. Um eine möglichst vollständige Abtrennung der eingesetzten katalytisch aktiven Verbindungen (K) zu gewährleisten, werden bei dem erfindungsgemäßen Verfahren vorzugsweise katalytisch aktive Verbindungen (K) eingesetzt, deren Siedepunkte bei 1023 hPa mindestens 10°C, insbesondere mindestens 20°C unter dem Siedepunkt des Hochsieders (L) liegen.

Bevorzugte katalytisch aktive Verbindungen (K) sind Etherverbindungen (E) und tertiäre Aminverbindungen (N).

Etherverbindungen (E) sind leicht zugängliche und leicht abzutrennende Chemikalien.

Bevorzugte Etherverbindungen (E) sind acyclische organische Etherverbindungen, die vorzugsweise mindestens 5 Ringatome und vorzugsweise höchstens 30 Ringatome aufweisen, wie 1,3-Dioxolan, Tetrahydrofuran (THF), Tetrahydropyran, 1,4-Dioxan, [12]Krone-4, [15] krone-5. Die cyclischen Etherverbindungen (E) können Kohlenwasserstoffsubtituenten aufweisen, insbesondere Alkylrest mit 1 bis 6 Kohlenstoffatomen, bevorzugt Methyl und Ethyl. Beispiele für substituierte cyclische Etherverbindungen (E) sind 4-Methyl-1,3-dioxolan, 3-Methyl-tetrahydrofuran, 2,2-Dimethyl-2,4-dioxan,

Ebenfalls bevorzugt sind lineare oder verzweigte organische Etherverbindungen (E), wie Mono- und Polyether. Als Monoether sind Ether mit einem Siedepunkt von mindestens 60°C bei 1023 hPa bevorzugt, beispielsweise Di-n-propylether.

Als Polyether können auch Polyalkylenglycole, wie Polyethylenglycol und Polypropylenglycol eingesetzt werden, die vorzugsweise keine freien OH-Gruppen aufweisen, d.h. mit Alkyl- oder Arylresten terminiert sind - beispielsweise Polyethylenglykoldimethylether. Die mittleren Molmassen Mn der Polyalkylenglycole betragen vorzugsweise mindestens 150, insbesondere mindestens 500 und vorzugsweise höchstens 10000, insbesondere höchstens 5000.

Bevorzugte tertiäre Aminverbindungen (N) sind Monoamine oder lineare, verzweigte oder cyclische Polyamine.

Bevorzugt sind die Monoamine der allgemeinen Formel (3)

N(R¹)₃ (3),

in der
- R¹: einen Kohlenwasserstoffrest mit 1 bis 20 Kohlenstoffatomen bedeutet.

Der Kohlenwasserstoffreste R¹ kann gesättigt oder ungesättigt, verzweigt oder unverzweigt, substituiert oder unsubstituiert sein. In der allgemeinen Formel (3) können verschiedenartige oder gleichartige Reste **R¹** vorliegen.

Der Kohlenwasserstoffreste **R¹** kann ein Alkylrest sein, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylrest, wie der n-Hexylrest; Heptylrest, wie der n-Heptylrest.1 Octylrest, wie der n-octylrest und iso-Octylreste, wie der 2,2,4-Trimethylpentylrest, Nonylrest, wie der n-Nonylrest, Decylrest, wie der n-Decylrest, Dodecylrest, wie der n-Dodecylrest, Octadecylrest, wie der n-Octadecylrest, Cycloalkylrest, wie der Cyclopentyl-, Cyclohexyl-, Cycloheptylrest und Methylcyclohexylreste; Alkinylrest, wie der Vinyl-, 1-Propenyl- und der 2-Propenylrest; Arylrest, wie der Phenyl-, Naphthyl-, Anthryl- und Phenanthrylrest; Alkarylrest, wie o-, m-, p-Tolylreste, Xylylrest und Ethylphenylrest, und Aralkylrest, wie der Benzylrest, der alpha- und der beta-Phenylethylrest. Der Kohlenwasserstoffrest R¹ weist bevorzugt 1-6 insbesondere 1-3 C-Atome auf. Vorzugsweise ist R¹ der Methyl-, Ethyl-, iso- und n-Propyl-, iso- und n-Butyl-, Pentyl-, Hexyl-, Heptyl-, Octyl-, Nonyl-, Decyl-, Phenyl-, Benzyl-oder Allyl-Rest.

Bevorzugte lineare tertiäre Polyamine (N) sind Ethylen- oder Propylendiamineinheiten enthaltende, N-Alkylreste aufweisende Polyamine (N) oder Gemische davon. Vorzugsweise enthalten die Polyamine (N) 1 bis 20, insbesondere 1 bis 10 Ethylen- oder Propylendiamineinheiten.

Besonders bevorzugte tertäre Aminverbindungen (N) sind Trimethylamin und Trimethylamin.

Auf 100 Gewichtsteile Siliciumverbindungen der allgemeinen Formel (2) werden vorzugsweise mindestens 0,1, besonders bevorzugt mindestens 0,5 und insbesondere mindestens 2 Gewichtsteile katalytisch aktive Verbindungen (K), und vorzugsweise höchstens 50, besonders bevorzugt höchstens 20 und insbesondere höchstens 10 Gewichtsteile katalytisch aktive Verbindungen (K), eingesetzt.

Das Neopentasilan der allgemeinen Formel (1) kann in einem Molekül gleiche oder verschiedene Bedeutungen von **R** aufweisen. Vorzugsweise weisen alle **R** die gleichen Bedeutungen auf. Besonders bevorzugt steht **R** für Cl.
**x** bedeutet vorzugsweise die Werte 0 oder 1.

Die Umwandlung der Siliciumverbindung der allgemeinen Formel (2) zu dem Zielprodukt der allgemeinen Formel (1) wird durch Zugabe des Katalysators gestartet. Zur Beschleunigung der Umsetzung wird bei dem erfindungsgemäßen Verfahren das bei der Reaktion gebildete Nebenprodukt Tetrahalogensilan von Anfang an abdestilliert. Dies kann im Vakuum, bei Umgebungsdruck oder Überdruck erfolgen. Vorzugsweise erfolgt die Umsetzung unter Umgebungsdruck. Die Umsetzung erfolgt vorzugsweise bei mindestens -10°C, besonders bevorzugt bei mindestens 50°C und insbesondere bei mindestens 100°C, und vorzugsweise bei höchstens 300°C, insbesondere bei höchstens 250°C. Die Umsetzung wird vorzugsweise mindestens 1 Stunde, besonders bevorzugt mindestens 3 Stunden und insbesondere mindestens 10 Stunden und vorzugsweise höchstens 10 Tage durchgeführt.

Im Hinblick auf eine möglichst hohe Raum/Zeitausbeute wird der Hochsieder (L) dem Destillationssumpf erst nach beendeter Umsetzung zugefügt, d.h. wenn die Hauptmenge des gebildeten Tetrahalogensilans abdestilliert ist und in der Destillationsblase dementsprechend genügend Raum zur Verfügung steht. Anschließend wird vorzugsweise bis zum Siedepunkt des Hochsieders (L) ausdestilliert. Aufgrund des höheren Siedepunktes des Hochsieders (L) wird dabei das freie und das gebundene Tetrahalogensilan ausgeschleppt. Den Destillationssumpf lässt man danach abkühlen, wobei das Tetrahalogensilan-freie Zielprodukt (1) ausfällt und durch Filtration, Sedimentation oder Zentrifugieren vorzugsweise als reiner Feststoff isoliert oder direkt in Suspension weiterverarbeitet werden kann.

In einer anderen, weniger bevorzugten Variante des erfindungsgemäßen Verfahrens wird das gebildete Tetrahalogensilan nicht schon während der Reaktion sondern erst nach beendeter Umsetzung abdestilliert und danach mit Hochsieder (L) versetzt und anschließend restliches (freies und gebundenes) Tetrahalogensilan abdestilliert.

Durch erneutes Lösen des Feststoffes in dem verwendeten oder einem anderen Hochsieder (L) oder einem anderen Lösungsmittel und anschließende Abtrennung unlöslicher Bestandteile durch Filtration, Sedimentation oder Zentrifugieren lässt sich das Produkt weiter aufreinigen. Es kann dann als Lösung weiterverarbeitet werden, oder erneut durch Einengen oder Abkühlen umkristallisiert und als.Feststoff isoliert werden.

Die zugesetzte Menge an Hochsieder (L) richtet sich in erster Linie nach der Löslichkeit des Zielprodukts d.h. es wird so wenig Hochsieder (L) wie möglich zugesetzt. Vorzugsweise wird die Hochsiedermenge so bemessen, dass das Zielprodukt in der Wärme möglichst vollständig gelöst ist und sich beim Abkühlen weitgehend abscheidet. Die bevorzugte Menge an Hochsieder (L) liegt bei mindestens 2, insbesondere mindestens 5 Gew.-% und vorzugsweise höchstens 20, insbesondere höchstens 50 Gew.-%, jeweils bezogen auf die eingesetzte Menge an Siliciumverbindung der allgemeinen Formel (2). Die optimale Menge kann im Einzelfall einfach ermittelt werden, indem in der Siedehitze genau die Menge an Hochsieder (L) zugefügt wird, bei der sich das Zielprodukt gerade vollständig löst.

Vorzugsweise erfolgt nach der Umsetzung ein Abkühlvorgang, vorzugsweise auf eine Temperatur von mindestens -15°C, insbesondere mindestens 0°C und vorzugsweise höchstens 60°C, besonders bevorzugt höchstens 40°C, insbesondere auf Raumtemperatur von 18 bis 25°C. Dabei kristallisiert das Zielprodukt der allgemeinen Formel (1) in reiner Form aus und wird durch Filtration, Sedimentation oder Zentrifugieren isoliert. Die Mutterlauge kann dem nächsten Ansatz zugesetzt werden, es kann aber auch durch Kühlen und/oder Einengen - d.h. Abdestillieren von flüchtigen Anteilen, insbesondere Hochsieder (L) - gelöstes Zielprodukt der allgemeinen Formel (1) ausgefällt und wie oben beschrieben isoliert werden.

Der gesamte Verfahrensprozess oder auch einzelne Prozessschritte können unabhängig voneinander in Anwesenheit oder Abwesenheit von Schutzgas, wie Stickstoff, Helium oder Argon durchgeführt werden; sie können aber auch an Luft durchgeführt werden, solange der Feuchtigkeitsgehalt bevorzugt maximal 10 ppbw beträgt. Bevorzugt werden alle Prozessschritte aus Kostengründen in Anwesenheit von Stickstoff durchgeführt.

Alle vorstehenden Symbole der vorstehenden Formeln weisen ihre Bedeutungen jeweils unabhängig voneinander auf. In allen Formeln ist das Siliciumatom vierwertig.

Sofern nicht anders angegeben, wird das nachstehende Beispiel bei einem Druck der umgebenden Atmosphäre, also etwa bei 1000 hPa, und bei Raumtemperatur, also bei etwa 23°C sowie bei einer relativen Luftfeuchtigkeit von etwa 50 % durchgeführt.

### Beispiel 1

In einem mit Stickstoff überlagerten 21-Kolben, der mit Thermometer, 35cm-Füllkörperkolonne und Magnetrührer versehen war, wurden 2254 g Hexachlordisilan (Wacker Chemie AG, Deutschland) und 145 g Tetrahydrofuran (Merck KGaA, Deutschland) vorgelegt. Die Mischung wurde zum Sieden erhitzt. Dabei stellte sich eine Kopftemperatur von 56°C ein. Durch Nachheizen des Reaktionsgemisches auf maximal 143°C konnte ein stetiger Destillatstrom aufrechterhalten werden. Binnen 5h wurden 1014,3 g Destillat abgenommen, das laut GC 89% Tetrachlorsilan und 11% THF enthielt. Im Destillationssumpf fiel dabei ein weißer Feststoff aus. Nach Zugabe von 216 g Toluol wurde die Reaktionsmischung erneut zum Sieden erhitzt. Innerhalb 90 Minuten wurden insgesamt 102,7 g Destillat bis zu einer Kopftemperatur von 107°C abgenommen. Laut GC hatte das Destillat folgende Zusammensetzung: 66% Tetrachlorsilan, 29% Toluol, 4% Hexachlordisilan, 0,8% THF. Die weiße Suspension wurde nach Abkühlen auf Raumtemperatur über eine Glasfritte filtriert, mit Toluol gewaschen und mittels Durchleiten von Stickstoff und Anlegen von Wasserstrahlvakuum getrocknet. Man isolierte 506,5 g eines farblosen kristallinen Feststoffes, dessen ¹H- und ²⁹Si-NMR zeigten, dass neben dem Zielprodukt Dodecachlorneopentasilan lediglich Spuren an Tetrachlorsilan, Toluol und Hexachlordisilan vorlagen.

## Patentansprüche

1. Verfahren zur Herstellung von Neopentasilanen der allgemeinen Formel (1)
Si(SiR₃)₄ (1),
bei dem Siliciumverbindungen der allgemeinen Formel (2)
R₃Si-(SiR₂-)ₓSiR₃ (2),
wobei
R ausgewählt wird aus Cl, Br und J und
x eine nichtnegative ganze Zahl bis 5 bedeutet, in Gegenwart von katalytisch aktiven Verbindungen (K) umgesetzt werden, wobei das bei der Reaktion gebildete Tetrahalogensilan von Anfang an abdestilliert wird, nach beendeter Umsetzung, d.h. wenn die Hauptmenge des gebildeten Tetrahalogensilans abdestilliert ist, eine bei Raumtemperatur flüssige Verbindung (L), die einen höheren Siedepunkt aufweist, als das freigesetzte Tetrahalogensilan dem Destillationssumpf zugefügt wird, die Abtrennung des Tetrahalogensilans durch Abdestillieren in Anwesenheit der Verbindung (L) erfolgt und man danach den Destillationssumpf abkühlen lässt, wobei die Tetrahalogensilan-freien Neopentasilane der allgemeinen Formel (1) ausfallen.

2. Verfahren nach Anspruch 1, bei dem die bei Raumtemperatur flüssige Verbindung (L) ausgewählt wird aus Kohlenwasserstoffen, Ethern, Siloxanen und deren Gemischen.

3. Verfahren nach Anspruch 1 oder 2, bei dem der Siedepunkt bei 1023 hPa der bei Raumtemperatur flüssigen Verbindung (L) mindestens 10°C über dem Siedepunkt des jeweiligen Tetrahalogensilans liegt.

4. Verfahren nach Anspruch 1 bis 3, bei dem 2 bis 50 Gew.-% an Verbindung (L), bezogen auf die eingesetzte Menge an Siliciumverbindung der allgemeinen Formel (2) eingesetzt wird.

5. Verfahren nach Anspruch 1 bis 4, bei dem die katalytisch aktiven Verbindungen (K) ausgewählt werden aus Etherverbindungen (E) und tertiären Aminverbindungen (N).

6. Verfahren nach Anspruch 5, bei dem die katalytisch aktiven Verbindungen (K) Tetrahydrofuran, Trimethylamin, oder Triethylamin sind.

7. Verfahren nach Anspruch 1 bis 6, bei dem auf 100 Gewichtsteile Siliciumverbindungen der allgemeinen Formel (2) 0,1 bis 50 Gewichtsteile katalytisch aktive Verbindungen (K) eingesetzt werden.

8. Verfahren nach Anspruch 1 bis 7, bei dem x die Werte 0 oder 1 bedeutet.

## Claims

1. Process for the preparation of neopentasilanes of the general formula (1)
Si(SiR₃)₄ (1),
in which silicon compounds of the general formula (2)
R₃Si-(SiR₂-)ₓSiR₃ (2),
in which
**R** is selected from Cl, Br and I and
**x** denotes a non-negative integer up to 5,
are reacted in the presence of catalytically active compounds (K), the tetrahalosilane formed in the reaction being distilled off from the beginning, a compound (L) which is liquid at room temperature and has a higher boiling point than the tetrahalosilane liberated being added to the bottom part of the distillation after the end of the reaction, i.e. when the main amount of the tetrahalosilane formed has been distilled off, the tetrahalosilane being separated off by distillation in the presence of the compound (L) and the bottom part of the distillation then being allowed to cool, the tetrahalosilane-free neopentasilanes of the general formula (1) being precipitated.

2. Process according to Claim 1, in which the compound (L) which is liquid at room temperature is selected from hydrocarbons, ethers, siloxanes and mixtures thereof.

3. Process according to Claim 1 or 2, in which the boiling point at 1023 hPa of the compound (L) which is liquid at room temperature is at least 10°C above the boiling point of the respective tetrahalosilane.

4. Process according to Claims 1 to 3, in which 2 to 50% by weight of compound (L), based on the amount of silicon compound of the general formula (2) which is used, is employed.

5. Process according to Claims 1 to 4, in which the catalytically active compounds (K) are selected from ether compounds (E) and tertiary amine compounds (N).

6. Process according to Claim 5, in which the catalytically active compounds (K) are tetrahydrofuran, trimethylamine or triethylamine.

7. Process according to Claims 1 to 6, in which, based on 100 parts by weight of silicon compounds of the general formula (2), 0.1 to 50 parts by weight of catalytically active compounds (K) are used.

8. Process according to Claims 1 to 7, in which x denotes the values 0 or 1.

## Revendications

1. Procédé pour la production de néopentasilanes de formule générale (1)
Si(SiR₃)₄ (1),
dans lequel on fait réagir des composés siliciés de formule générale (2)
R₃Si-(SiR₂-)ₓSiR₃ (2),
où
**R** est choisi parmi Cl, Br et I et
**x** représente un nombre entier non négatif valant
jusqu'à 5,
en présence de composés à activité catalytique (K), le tétrahalogénosilane formé pendant la réaction étant dès le début éliminé par distillation, en ajoutant au résidu de distillation une fois la réaction terminée, c'est-à-dire lorsque la quantité principale du tétrahalogénosilane formé est éliminée par distillation, un composé (L) liquide à la température ambiante, qui présente un plus haut point d'ébullition que le tétrahalogénosilane libéré, la séparation du tétrahalogénosilane s'effectue par élimination par distillation en présence du composé (L) et on laisse ensuite refroidir le résidu de distillation, les néopentasilanes de formule générale (1), exempts de tétrahalogénosilane, précipitant.

2. Procédé selon la revendication 1, dans lequel le composé (L) liquide à la température ambiante est choisi parmi des hydrocarbures, des éthers, des siloxanes et des mélanges de ceux-ci.

3. Procédé selon la revendication 1 ou 2, dans lequel le point d'ébullition sous 1 023 hPa du composé (L) liquide à la température ambiante est supérieur d'au moins 10°C au point d'ébullition du tétrahalogénosilane respectif.

4. Procédé selon l'une quelconque des revendications 1 à 3, dans lequel on utilise de 2 à 50 % en poids de composé (L), par rapport à la quantité utilisée de composé silicié de formule générale (2).

5. Procédé selon l'une quelconque des revendications 1 à 4, dans lequel les composés (K) à activité catalytique sont choisis parmi des composés de type éther (E) et des composés de type amine tertiaires (N).

6. Procédé selon la revendication 5, dans lequel les composés (K) à activité catalytique consistent en tétrahydrofurane, triméthylamine ou triéthylamine.

7. Procédé selon l'une quelconque des revendications 1 à 6, dans lequel on utilise de 0,1 à 50 parties en poids de composés (K) à activité catalytique pour 100 parties en poids de composés siliciés de formule générale (2).

8. Procédé selon l'une quelconque des revendications 1 à 7, dans lequel x représente la valeur 0 ou 1.
